# EUROPEAN PATENT APPLICATION

(11) **EP 4 260 960 A1**
(43) Date of publication of application: **18.10.2023**
(21) Application number: 21903874.2
(22) Date of filing: 09.12.2021
(51) Int. Cl.: B21D 37/16, B21D 22/02, C21D 9/46

(54) **HOT-STAMPED COMPONENT AND METHOD FOR MANUFACTURING SAME**

(30) Priority: 09.12.2020 KR 20200171622
(71) Applicant: Hyundai Steel Company, Incheon 22525 (KR)
(72) Inventor: YOON, Seung Chae, Incheon 22525 (KR); KONG, Je Youl, Incheon 22525 (KR); KIM, Sung Min, Incheon 22525 (KR); KIM, Je Woo Soo, Incheon 22525 (KR); KIM, Hye Jin, Incheon 22525 (KR); PARK, Jae Myoung, Incheon 22525 (KR); YOO, Byung Gil, Incheon 22525 (KR); YOOK, Wan, Incheon 22525 (KR); YIM, Gi Hak, Incheon 22525 (KR); JUNG, Seung Pill, Incheon 22525 (KR); JUNG, Hyun Yeong, Incheon 22525 (KR)
(74) Representative: Viering, Jentschura & Partner mbB Patent- und Rechtsanwälte
(86) International application number: PCT/KR2021/018671
(87) International publication number: WO 2022/124828

(57) **Abstract**

A method of manufacturing a hot stamping component according to an exemplary embodiment of the present disclosure includes: inserting a blank having a plating layer formed on at least one surface of a base material into a heating furnace having a plurality of sections having different temperature increase rate ranges; and multi-stage heating the blank gradually while passing through the plurality of sections. The plurality of sections includes: a first heating section having a first average temperature increase rate change rate; after the first heating section, a second heating section having a second average temperature increase rate change rate different from the first average temperature increase rate change rate; and after the second heating section, a third heating section having a third average temperature increase rate change rate different from the first average temperature increase rate change rate and the second average temperature increase rate change rate. The third average temperature increase rate change rate includes a section in which a positive value is changed to a negative value.

## Description

### TECHNICAL FIELD

The present disclosure relates to a hot stamping component and a method of manufacturing the hot stamping component.

### BACKGROUND

According to the reinforcement of environmental regulations and safety standards in the automobile industry, the need for high-strength and light-weight vehicle materials is increasing. As a method of manufacturing such high-strength and light-weight vehicle materials, hot stamping technology receives attention, and R&D on hot stamping materials is being actively conducted.

The hot stamping process generally includes heating/forming/cooling/trimming, and may utilize changes in microstructure, such as phase transformation of materials and alloying of plating during the process. In this case, in the hot stamping process, there may be problems in that an amount of hydrogen mixed during heating or heat treatment is increased, and the performance of components, such as poor weldability according to the structure of the plating layer may be deteriorated. In particular, microstructure characteristics of the hot stamping material are changed according to the heating or heat treatment temperature, and accordingly, hydrogen embrittlement and welding performance may be changed.

Therefore, for the component performance of the hot stamping material, a precise control using the hot stamping heat treatment temperature condition is required. As a related technology, there is Korean Patent Laid-Open Publication No. 10-2013-0136565 (Title of the Invention: Steel plate for hot stamping member and manufacturing method thereof).

### SUMMARY

### Technical Problem

Provided are a hot stamping component with improved component performance, such as strength characteristics, hydrogen embrittlement according to an amount of hydrogen mixed, and weldability according to a structure of a plating layer by controlling a hot stamping heating temperature, and a method of manufacturing the hot stamping component.

### Technical Solution

According to an exemplary embodiment of the present disclosure, a method of manufacturing a hot stamping component, the method includes: inserting a blank including a plating layer formed on at least one surface of a base material into a heating furnace having a plurality of sections having different temperature increase rate ranges; and multi-stage heating the blank by gradually heating while passing through the plurality of sections, wherein the plurality of sections includes: a first heating section having a first average temperature increase rate change rate; after the first heating section, a second heating section having a second average temperature increase rate change rate different from the first average temperature increase rate change rate; and after the second heating section, a third heating section having a third average temperature increase rate change rate different from the first average temperature increase rate change rate and the second average temperature increase rate change rate, wherein the third average temperature increase rate change rate includes a section in which a positive value is changed to a negative value.

Between the first heating section and the second heating section, the change from the first average temperature increase rate change rate to the second average temperature increase rate change rate may be discontinuous.

The third heating section may include a 3-1 heating section having a 3-1 average temperature increase rate change rate and a 3-2 heating section having a 3-2 average temperature increase rate change rate, wherein the 3-1 average temperature increase rate change rate may have a positive value, and the 3-2 average temperature increase rate change rate may have a negative value, and an absolute value of the 3-1 average temperature increase rate change rate may be less than an absolute value of the 3-2 average temperature increase rate change rate.

The first average temperature increase rate change rate and the second average temperature increase rate change rate each may have a negative value, and an absolute value of the first average temperature increase rate change rate may be greater than an absolute value of the second average temperature increase rate change rate.

The plurality of sections, after the third heating section, may further include a fourth heating section having a fourth average temperature increase rate change rate different from the first average temperature increase rate change rate, the second average temperature increase rate change rate, and the third average temperature increase rate change rate, and an absolute value of the fourth average temperature increase rate change rate may be less than the absolute value of each of the first average temperature increase rate change rate, the second average temperature increase rate change rate, and the third average temperature increase rate change rate.

The 3-1 average temperature increase rate change rate may have a value of 0 or greater and 0.25 °C/s² or less, and the 3-2 average temperature increase rate change rate may have a value of -0.3 °C/s² or greater and 0 or less.

The first average temperature increase rate change rate may have a value of -0.5 °C/s² or greater and 0 or less, and the second average temperature increase rate change rate may have a value of -0.25 °C/s² or greater and 0 or less.

The plating layer may be alloyed in the second heating section, and the base material may have a phase transformation in the third heating section.

According to an exemplary embodiment of the present disclosure, a hot stamping component manufactured according to the method described above, the hot stamping component includes an amount of mixed hydrogen of 0 or greater and less than 0.21 ppm, and a dynamic resistance value of greater than 0 and 0.8 mΩ or less.

### Advantageous Effects

According to embodiments of the present disclosure, by controlling a temperature increase rate by section in a hot stamping heating process, the component performance of the hot stamping component, such as strength characteristics, hydrogen embrittlement according to an amount of mixed hydrogen, and weldability according to the structure of a plating layer, may be improved

### BRIEF DESCRIPTION OF DRAWINGS

FIG. 1 shows a flowchart illustrating a method of manufacturing a hot stamping component according to an exemplary embodiment of the present disclosure;
FIG. 2 shows a graph showing a temperature change of a blank when the blank is singleheated by the method of related art;
FIG. 3 shows a graph illustrating a temperature change when a blank is heated in multiple stages and soaking-heated in a method of manufacturing a hot stamping component according to an exemplary embodiment of the present disclosure;
FIG. 4 shows a graph showing a temperature increase rate change rate in a plurality of sections according to a heating time in the method of manufacturing a hot stamping component according to an exemplary embodiment of the present disclosure;
FIG. 5 shows a scanning electron microscope (SEM) image showing a cross section of a hot stamping component according to an exemplary embodiment of the present disclosure;
FIG. 6 shows an SEM image showing a cross-section of a hot stamping component according to a comparative example of the present disclosure;
FIG. 7 shows a schematic plan view illustrating a blank used in a method of manufacturing a hot stamping component according to an exemplary embodiment of the present disclosure; and
FIG. 8 shows is a schematic plan view illustrating a blank inserted into a heating furnace in a method of manufacturing a hot stamping component according to an exemplary embodiment of the present disclosure.

### DETAILED DESCRIPTION

As the present disclosure allows for various changes and numerous embodiments, particular embodiments will be illustrated in the drawings and described in detail in the written description The advantages, features, and methods of achieving the advantages of the present disclosure may be clear when referring to the embodiments described below together with the drawings. However, the present disclosure may have different forms and should not be construed as being limited to the descriptions set forth herein.

It will be understood that, although the terms "first", "second", "third", etc., may be used herein to describe various elements, these elements should not be limited by these terms. These terms are only used to distinguish one element from another.

In the following embodiments, the singular forms include the plural forms unless the context clearly indicates otherwise.

It will be further understood that the terms "comprises" and/or "comprising," when used in this specification, specify the presence of stated features or constituent elements but do not preclude the presence or addition of one or more other features or constituent elements.

It will also be understood that when a film, a region, a constituent element is referred to as being "on" or "above" another element, the film, the region, or the constituent element may be in direct contact with the other element or other intervening film, region, or constituent element may be present.

In the drawings, thicknesses of layers and regions may be exaggerated or reduced for convenience of explanation. For example, the sizes and thicknesses of elements in the drawings are arbitrarily expressed for convenience of explanation, and thus, the current inventive concept is not limited to the drawings.

When a certain embodiment may be implemented differently, a specific process order may be performed differently from the described order. For example, two consecutively described processes may be performed substantially at the same time or performed in an order opposite to the described order.

Hereafter, the present disclosure will be described more fully with reference to the accompanying drawings. In describing the present disclosure with reference to drawings, like reference numerals are used for elements that are substantially identical or correspond to each other.

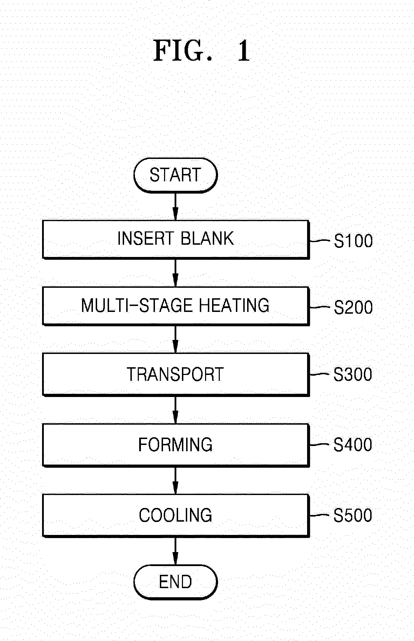

FIG. 1 shows a flowchart illustrating a method of manufacturing a hot stamping component according to an exemplary embodiment of the present disclosure. Hereinafter, a method of manufacturing a hot stamping component will be described with reference to FIG. 1.

The method of manufacturing a hot stamping component according to an exemplary embodiment of the present disclosure may include inserting a blank (S100) and multi-stage heating (S200), and after the multi-stage heating (S200), may further include transferring (S300), forming (S400), and cooling (S500).

First, the operation of inserting a blank (S100 may be an operation of introducing a blank into a heating furnace having a plurality of sections having different temperature increase rate ranges. The blank may be provided in a form in which a plating layer is formed on at least one surface of a base material.

The blank inserted into the heating furnace may be formed by cutting a plate (or a base material) for forming a hot stamping component. The plate material may be manufactured by performing hot rolling or cold rolling on a steel slab, followed by annealing heat treatment. In addition, after the annealing heat treatment, an Al-Si-based plating layer or a Zn plating layer may be formed on at least one surface of the annealed sheet material, and the type of the plating layer formed on one surface of the base material is not limited thereto.

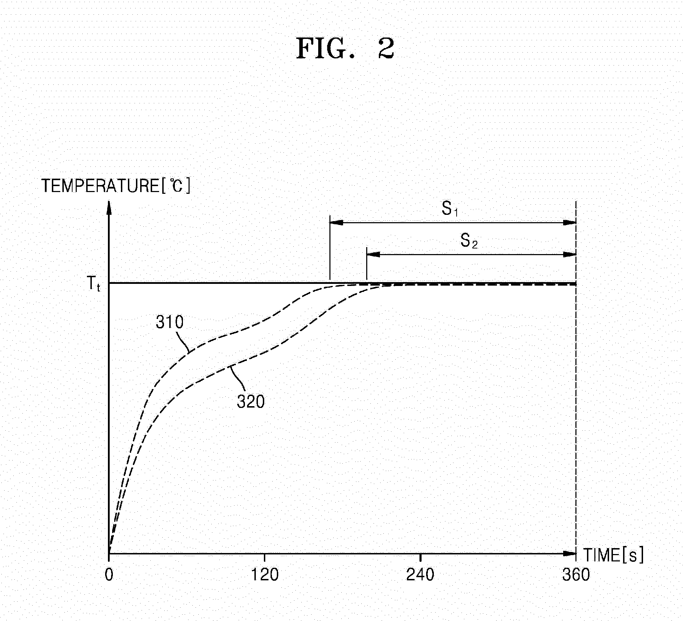

After the operation of inserting a blank (S100), an operation of multi-stage heating (S200) may be performed. The operation of multi-stage heating (S200) may be an operation in which the blank passes through a plurality of sections provided in the heating furnace and is heated step by step. The operation of multi-stage heating (S200) will be described in more detail below using graphs of FIGS. 2 to 4.

After the operation of multi-stage heating (S200), operations of the transferring (S300), the forming (S400), and the cooling (S500) may be further performed.

The operation of transferring (S300) may be an operation of transferring a blank that is soaking-heated during the multi-stage heating from the heating furnace to a press mold. In the operation of transferring the soaking-heated blank from the heating furnace to the press mold, the soaking-heated blank may be air-cooled for 7 seconds to 15 seconds, preferably, it may be air-cooled for 10 seconds to 15 seconds.

The operation of forming (S400) may be an operation of hot stamping the transferred blank to form a molded body. The operation of cooling (S500) may be an operation of cooling the formed molded body.

After being molded into a final component shape in a press mold, a final product may be formed by cooling the molded body. A cooling channel through which a refrigerant circulates may be provided in the press mold. The heated blank may be rapidly cooled at the same time as molding by the circulation of the refrigerant supplied through the cooling channel provided in the press mold. At this time, in order to prevent a spring back phenomenon of the plate material and maintain a desired shape, a rapid cooling may be performed while pressing the press die in a closed state. In the forming and cooling of the heated blank, the heated blank may be cooled at an average cooling rate of at least 10 °C/s or greater to a martensite end temperature. The blank may be held for 3 to 20 seconds in the press mold. If the holding time in the press mold is less than 3 seconds, a sufficient amount of martensite may not be generated and mechanical properties may not be secured. In addition, when the holding time in the press mold exceeds 20 seconds, the holding time in the press mold becomes long, and thus, productivity may decrease.

FIG. 2 shows a graph showing a temperature change of the blank when the blank is singleheated by the method of the related art. Specifically, FIG. 2 shows a graph showing the temperature change of blanks with time when a blank with a thickness of 1.2 mm and a blank with a thickness of 1.6 mm are simultaneously single heated (310, 320) after setting the temperature of the furnace so that the internal temperature of the furnace is maintained equal to a target temperature Tt of the blank.

In this case, the target temperature Tt of the blank may be equal to or greater than Ac3 (a temperature at which the transformation from ferrite to austenite is completed). Preferably, the target temperature Tt of the blank may be about 930 °C. More preferably, the target temperature Tt of the blank may be about 950 °C. However, the present disclosure is not limited thereto. In addition, the single heating is not heating by putting a blank having a thickness of 1.2 mm and a blank having a thickness of 1.6 mm into the heating furnace, respectively, but means a case in which a blank having a thickness of 1.2 mm and a blank having a thickness of 1.6 mm are simultaneously introduced into the furnace and heated after setting the temperature of the furnace to a single temperature.

Referring to FIG. 2, after setting the temperature inside the heating furnace to the same temperature as the target temperature Tt of the blank, when a blank having a thickness of 1.2 mm and a blank having a thickness of 1.6 mm are single heated at the same time, it may be seen that the blank having a thickness of 1.2 mm reaches the target temperature Tt earlier than the blank having a thickness of 1.6 mm.

That is, the blank having a thickness of 1.2 mm first reaches the target temperature Tt, and is soaking-heated for a first time S1 (310), and the blank having a thickness of 1.6 mm may be soaking-heated for a second time S2 (320) that is shorter than the first time S1 (310). Because the soaking heating time is adjusted based on the blank reaching the target temperature late, the blank with a thickness of 1.2 mm that has reached the target temperature first may be overheated, and thus, hydrogen-delayed rupture of the blank having a thickness of 1.2 mm increases, and weldability may be reduced.

In addition, when a control range is set based only on the target temperature Tt and time of the hot stamping process, there is a problem in that the performance of the component may not be effectively controlled. For example, a component including an Al-Si plating layer may be accompanied by an alloying of the plating layer and a phase transformation operation of a base material during the hot stamping process. At this time, depending on the temperature history applied to the component and the control of the hot stamping process, the structure of a plating layer, the thickness of an interdiffusion layer, peeling of a plating layer, the formability, hydrogen embrittlement, and weldability are determined differently. The conventional hot stamping process may be controlled based on the above-mentioned final target temperature Tt or an overall temperature increase rate. Because there is a limit to precisely controlling the performance of components by simply controlling the process using only the target temperature and time, hereinafter, in the embodiments of the present disclosure, the component performance is easily and precisely controlled by controlling the temperature increase rate change rate for a blank.

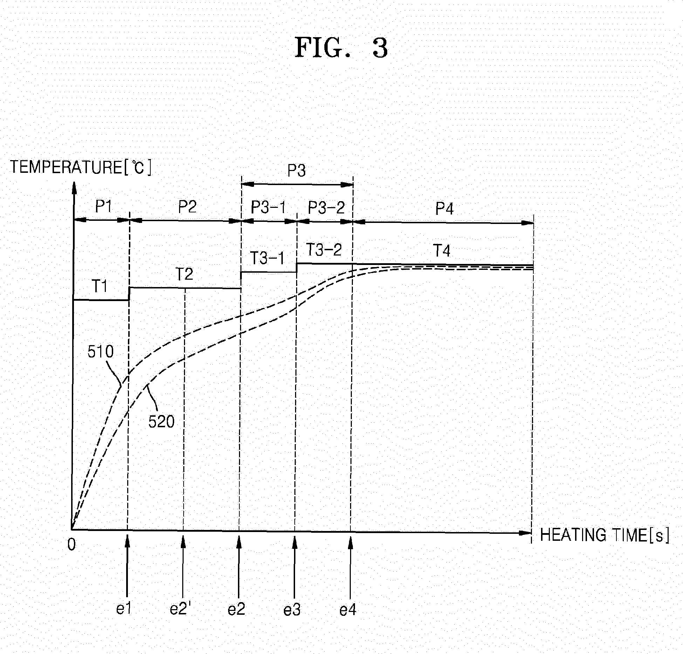

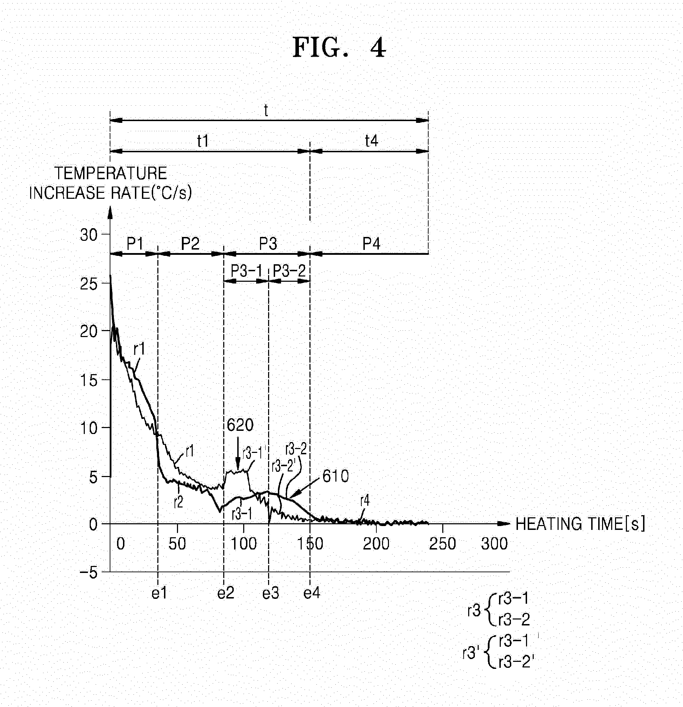

Hereinafter, with reference to FIGS. 3 and 4, a plurality of sections in which a blank passes and is heated step by step in the operation of multi-stage heating will be described.

FIG. 3 shows a graph illustrating a temperature change when a blank is heated in multiple stages and soaking-heated in the method of manufacturing a hot stamping component according to an exemplary embodiment of the present disclosure. More specifically, FIG. 3 is a graph showing a temperature change according to time, that is, shows a temperature change according to time in an exemplary embodiment of the present invention in the case when a blank having a thickness of 1.2 mm is multi-stage heated 510 and a blank having a thickness of 1.6 mm is multi-stage heated 520.

Referring to FIG. 3, a heating furnace according to an exemplary embodiment may include a plurality of heating sections P1, P2, P3, and P4 having different temperature ranges. More specifically, the heating furnace may include a first heating section P1 having a first temperature range T1, a second heating section P2 having a second temperature range T2, a third heating section P3 having a third temperature range T3, and a fourth heating section P4 having a fourth temperature range T4. In this case, the third heating section T3 may include two sections having different temperature ranges. The third heating section T3 may include a 3-1 heating section P3-1 having a 3-1 temperature range T3-1, and a 3-2 heating section P3-2 having a 3-2 temperature range T3-2. According to an exemplary embodiment, the second heating section T2 may include a plurality of sections having different temperature ranges. The second heating section T2 may include a 2-1 heating section P2-1 having a 2-1 temperature range T2-1 to a 2-n heating section P2-n having a 2-n temperature range T2-n. Also, the first heating section P1 may include a plurality of sections having different temperature ranges. The first heating section P1 may include a 1-1 heating section P1-1 having a 1-1 temperature range T1-1 to a 1-n heating section P1-n having a 1-n temperature range T1-n.

The first heating section P1 to the fourth heating section P4 may be sequentially arranged in the heating furnace. The first heating section P1 may be adjacent to an inlet of the heating furnace into which the blank is placed, and the fourth heating section P4 may be adjacent to an outlet of the heating furnace through which the blank is discharged. Accordingly, the first heating section P1 having the first temperature range T1 may be the first section of the heating furnace, and the fourth heating section P4 having the fourth temperature range T4 may be the last section of the heating furnace. As will be described later, the fourth heating section P4, which is the last section among the plurality of sections of the heating furnace, may be a section in which soaking-heating is performed, not a section in which multi-stage heating is performed.

The temperature of a plurality of sections provided in the heating furnace, for example, the temperature of the first heating section P1 to the fourth heating section P4 may increase in a direction towards the outlet of the heating furnace from which the blank is discharged from the inlet of the heating furnace through which the blank is placed. In addition, a temperature difference between two adjacent sections among the plurality of sections provided in the heating furnace may be greater than 0 °C and less than or equal to 100 °C. For example, the temperature difference between the first heating section P1 and the second heating section P2 may be greater than 0 °C and equal to or less than 100 °C.

In an exemplary embodiment, the first temperature range T1 of the first heating section P1 may be in a range from about 840 °C to about 860 °C, and in a range from about 835 °C to about 865 °C. The second temperature range T2 of the second heating section P2 may be in a range from about 870 °C to about 920 °C, and in a range from about 865 °C to about 925 °C. The 3-1 temperature range T3-1 of the 3-1 heating section P3-1 may be in a range from about 920 °C to about 940 °C, and in a range from about 915 °C to about 945 °C. The 3-2 temperature range T3-2 of the 3-2 heating section P3-2 may be in a range from about 940 °C to about 960 °C, and in a range from about 935 °C to about 965 °C. The fourth temperature range T4 of the fourth heating section P4 may be in a range from about Ac3 to about 1,000 °C. Preferably, the fourth temperature range T4 of the fourth heating section P4 may be 930 °C or greater and 1,000 °C or less. More preferably, the fourth temperature range T4 of the fourth heating section P4 may be 950 °C or greater and 1,000 °C or less.

According to an exemplary embodiment, when the second heating section P2 includes the 2-1 heating section P2-1 and the 2-2 heating section P2-2 having different temperature ranges as described above, the 2-1 temperature range T2-1 may be in a range from about 870 °C to about 890 °C, and may be in a range from about 865 °C to about 895 °C, and the 2-2 temperature range T2-2 of the 2-2 heating section P2-2 may be in a range from about 900 °C to about 920 °C, and in a range from about 895 °C to about 925 °C.

Boundary values defining the plurality of sections described above will be described. The boundary values represent the heating time range (sec) as the horizontal axis of the graph. First, a first boundary value e1 positioned between the first heating section P1 and the second heating section P2 may be in a range from about 30 sec to about 50 sec, and may be about 40 sec. The second boundary value e2 positioned between the second heating section P2 and the third heating section P3 may be in a range from about 80 sec to about 130 sec, and may be about 85 sec. The third boundary value e3 positioned between the 3-1 heating section P3-1 and the 3-2 heating section P3-2 may be in a range from about 110 sec to about 180 sec, and may be about 120 sec. The fourth boundary value e4 positioned between the 3-2 heating section P3-2 and the fourth heating section P4 may be in a range from about 140 sec to about 230 sec, and may be about 150 sec.

According to an exemplary embodiment, when the second heating section P2 includes the 2-1 heating section P2-1 and the 2-2 heating section P2-2 having different temperature ranges as described above, a 2-1 boundary value e2' positioned between the 2-1 heating section P2-1 and the 2-2 heating section P2-2 may be in a range from about 50 sec to about 110 sec, and may be about 60 sec.

In FIG. 3, the heating furnace according to an exemplary embodiment of the present disclosure is illustrated as having five sections P1, P2, P3-1, P3-2, and P4 having different temperature ranges, but the present disclosure is not limited thereto. Five, seven, or eight sections having different temperature ranges may be provided in the heating furnace.

FIG. 4 is a graph showing a temperature increase rate change rate in a plurality of sections according to heating time in the method of manufacturing a hot stamping component according to an exemplary embodiment of the present disclosure, that is, a graph showing a temperature increase rate (°C/s) of a blank according to heating time (s). The plurality of sections and boundary values illustrated in FIG. 4 have the same contents as those described above in FIG. 3, and descriptions may be simplified or omitted.

Referring to FIG. 4, the distribution of the temperature increase rate (°C/s) or the temperature increase rate change rate (°C /s²) in a plurality of sections in which the multi-stage heating of a blank is performed is as described below. Hereinafter, the term "temperature increase rate change rate" refers to an average slope of each section of the graph shown in FIG. 4, and may be described as 'average temperature increase rate change rate'. Hereinafter, the 'average temperature increase rate change rate' in one section may be defined as, for example, a value obtained by dividing a difference between the initial temperature increase rate and the final temperature increase rate in the corresponding section by the time of the corresponding section. FIG. 4 shows a temperature increase rate first control curve 610 (hereinafter, a first control curve 610) according to an exemplary embodiment of the present disclosure and a temperature increase rate second control curve 620 (hereinafter, a second control curve 620) according to a comparative example.

First, the first control curve 610 according to an exemplary embodiment of the present disclosure will be described.

The first heating section P1 may have a first average temperature increase rate change rate r1. The second heating section P2 positioned after the first heating section P1 may have a second average temperature increase rate change rate r2 different from the first average temperature increase rate change rate r1. The third heating section P3 positioned after the second heating section P2 may have a third average temperature increase rate change rate r3 different from the first and second average temperature increase rate change rates r1 and r2. In this case, the third average temperature increase rate change rate r3 may include a section in which a positive value is changed to a negative value. The fourth heating section (P4) positioned after the third heating section P3 may have a fourth average temperature increase rate change rate r4 different from the first, second, and third average temperature increase rate change rates r1, r2, and r3.

The first heating section P1 may be a general temperature rising section, and in the second heating section P2, the temperature increase rate is gently decreased (|r1|>|r2|) compared to the first heating section P1, and thus, alloying of a plating layer may be performed. The third heating section P3 is a phase transformation section in which a base material of a blank undergoes phase transformation, and the 3-1 heating section P3-1 may have a positive (+) temperature increase rate change rate, and the 3-2 heating section P3-2 may have a negative (-) temperature increase rate change rate. The fourth heating section P4 may be a stabilization section in which a blank is soaking-heated with a uniform temperature.

Referring to the first control curve 610, the first average temperature increase rate change rate r1 and the second average temperature increase rate change rate r2 respectively have a negative value, an absolute value of the first average temperature increase rate change rate r1 may be greater than an absolute value of the second average temperature increase rate change rate r2 (|r1|>|r2|). The first average temperature increase rate change rate r1 may be about -0.5 °C/s² or greater and 0 or less, for example, about -0.3 °C/s². The second average temperature increase rate change rate r2 may be greater than or equal to about -0.25 °C/s² and less than or equal to 0, for example, about - 0.07 °C/s².

Between the first heating section P1 and the second heating section P2, that is, in the vicinity of the first boundary value e1, the change from the first average temperature increase rate change rate r1 to the second average temperature increase rate change rate r2 is discontinuous. More specifically, a temperature increase rate v1 in the first boundary value e1 defining the first average temperature increase rate change rate r1 in the first heating section P1 and a temperature increase rate v2 in the first boundary value e1 defining the average temperature increase rate change rate r2 in the second heating section P2 may have different values. In other words, the final temperature increase rate v1 of the first average temperature increase rate change rate r1 and the initial temperature increase rate v2 of the second average temperature increase rate change rate r2 may be different values. When the temperature increase rate change rate discontinuously changes in the vicinity of the first boundary value e1 (r1 → r2) (610), the weldability of a hot stamping component may be improved when compared to the case when the temperature increase rate change rate continuously changes (620).

The discontinuous change of the average temperature increase rate change rate between the first heating section P1 and the second heating section P2 is because a lot of energy is required to a plating layer change. In order for Fe of a base material to be diffused into an Al plating layer and an Al-Fe phase is initially generated and grown in the plating layer, the supply of necessary energy is needed. In addition, Fe diffused into the base material generates an Al-Fe-Si alloy layer over time, and the more discontinuous the change in the temperature increase rate change rate near the first boundary value e1, the more uniform diffusion to a surface, and thus, favorable weldability may be obtained. On the other hand, when the change in the temperature increase rate change rate is continuous, because the diffusion of Al-Fe-Si to the surface is fast and non-uniform, phases with high welding resistance presents on the surface, resulting in poor weldability.

The third heating section P3 may include a 3-1 heating section P3-1 having a 3-1 temperature increase rate change rate r3-1, and a 3-2 heating section P3-2 having a 3-2 temperature increase rate change rate r3-2. The 3-1 average temperature increase rate change rate r3-1 has a positive value, the 3-2 average temperature increase rate change rate r3-2 has a negative value, and the third average temperature increase rate change rate r3 may have a section in which a positive value changes to a negative value. In this case, an absolute value of the 3-1 average temperature increase rate change rate r3-1 may be less than an absolute value of the 3-2 average temperature increase rate change rate r3-2 (|r3-1|<|r3-2|). The 3-1 average temperature increase rate change rate r3-1 may be 0 or greater and about 0.25 °C/s² or less, and for example, the 3-1 average temperature increase rate change rate r3-1 may be about 0.07 °C/s². The 3-2 average temperature increase rate change rate r3-2 may be about -0.3 °C/s² or greater and 0 or less, for example, about -0.08 °C/s².

As the third average temperature increase rate change rate r3 in the 3-1 heating section P3-1 is smaller and as the slope of the first control curve 610 is gentle, the amount of mixed hydrogen decreases, and thus, hydrogen embrittlement is improved. However, the second control curve 620 has a form in which the temperature increase rate change rate rapidly increases or discontinuously increases in the 3-1 heating section P3-1. In this case, the amount of mixed hydrogen increases, and thus, hydrogen embrittlement may be reduced. In this way, unlike between the first heating section P1 and the second heating section P2, in the third heating section P3, as a section in which a phase transformation of the base material is performed, if there is a rapid temperature change, there may be problems, such as hydrogen embrittlement and delayed rupture, thus, the lower the temperature increase rate change rate, the more advantageous.

Between the second heating section P2 and the 3-1 heating section P3-1, that is, in the vicinity of the second boundary value e2, the change from the second average temperature increase rate change rate r2 to the 3-1 average temperature increase rate change rate r3-1 is a change from a negative value to a positive value. That is, as the temperature increase rate decreases and then increases, a phase transformation of a base material may occur. For example, during the phase transformation of the base material, when transforming to austenite in the corresponding section, an endothermic reaction occurs. Because energy supply is required for the endothermic reaction, the temperature increase rate must be increased again in the 3-1 heating section P3-1 to induce a reasonable level of phase transformation into austenite.

Between the 3-1 heating section P3-1 and the 3-2 heating section P3-2, that is, in the vicinity of the third boundary value e3, the change from the 3-1 average temperature increase rate change rate r3-1 the 3-2 average temperature increase rate change rate r3-2 is a change from a positive value to a negative value. That is, as the temperature increase rate increases and then decreases again, a phase transformation of a base material may occur. As the phase transformation progresses, the endothermic reaction requires a large amount of thermal energy, and thus, the temperature increase rate increases, but as the phase transformation progresses, the amount of austenite increases, and accordingly, the thermal energy required for the endothermic reaction may gradually decrease in the 3-2 heating section P3-2, and thus, the temperature increase rate may decrease.

An absolute value of the fourth average temperature increase rate change rate r4 may be less than an absolute value of each of the first average temperature increase rate change rate r1, the second average temperature increase rate change rate r2, and the third average temperature increase rate change rate r3. For example, the fourth average temperature increase rate change rate r4 is a value close to zero, and the fourth heating section P4 may be a section soaking-heated with a uniform temperature. In the fourth heating section P4, the heating time t4 of the blank may be about 50% or less of the total heating time t. This means that the longer the time t4 during which the blank is soaking-heated in the fourth heating section P4 compared to the time t1 in which the blank is heated in multiple stages in the first to third heating sections P1, P2, and P3, the component characteristics, such as weldability, hydrogen embrittlement, and bending performance may be reduced. For example, a ratio (t1:t4) of a length of the multi-stage heating sections P1, P2, and P3 to a length of the soaking-heating section P4 may satisfy 1:1 to 4:1.

Hereinafter, the characteristic of the second control curve 620 compared to the first control curve 610 described above will be described, but differences from the first control curve 610 will be mainly described. Referring to the second control curve 620, a first' average temperature increase rate change rate r1' between the first heating section P1 and the second heating section P2 is continuously changed. More specifically, a temperature increase rate in the first boundary value e1 defining the first' average temperature increase rate change rate r1' in the first heating section P1, and a temperature increase rate v1' in the first boundary value e1 defining the first' average temperature increase rate change rate r1' the in the second heating section P2 may have the same value.

The first' average temperature increase rate change rate r1' may be about -0.26 °C/s² or greater and 0 or less, for example, about -0.2 °C/s². The change characteristics of the temperature increase rate change rates r3', r3-1', and r3-2' in the third heating section P3 of the second control curve 620 may have the same as those described in the first control curve 610. However, the 3-1' temperature increase rate change rate r3-1' may have a discontinuous and unstable value compared to the 3-1 average temperature increase rate change rate r3-1 of the first control curve 610. In this case, the 3-1' temperature increase rate change rate r3-1' may denote a rate of change at a front end in which the temperature increase rate shows an increasing trend during the 3-1 heating section P3-1. The 3-1' temperature increase rate change rate r3-1' may be about 0.04 °C/s² or greater and about 0.16 °C/s² or less, for example, about 0.1 °C/s². The 3-2' temperature increase rate change rate r3-2' may be about -0.16 ° °C/s² or greater and about -0.04 °C/s² or less, for example, about - 0.1 °C/s². The fourth heating section P4 of the second control curve 620, like the first control curve 610, may be a soaking-heating section in which the fourth average temperature increase rate change rate r4 has a value close to zero.

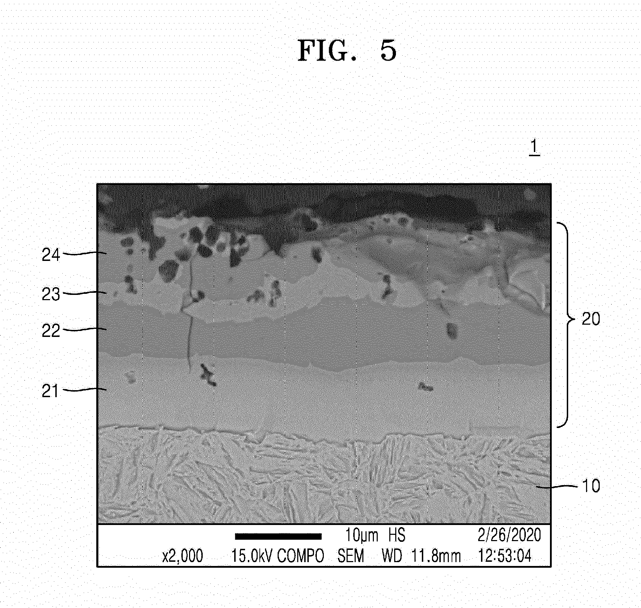

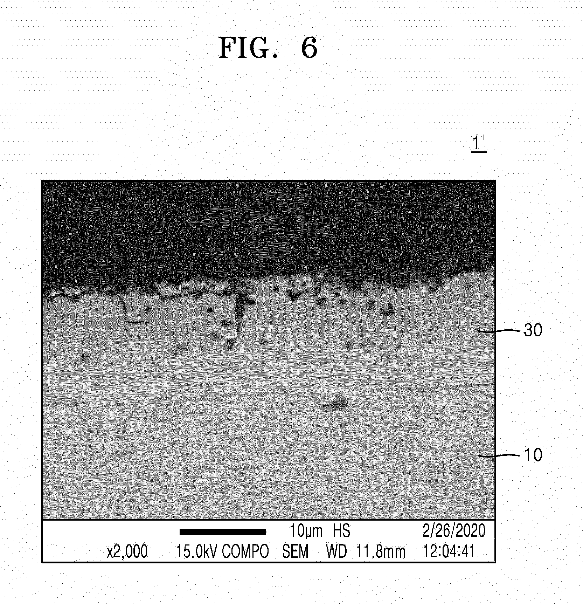

In this way, in the method of manufacturing a hot stamping component according to an exemplary embodiment of the present disclosure, by controlling the temperature increase rate change rate for each section according to the characteristics of a plurality of sections as described above, component characteristics, such as ultra-high strength characteristics of a hot stamping component, weldability, hydrogen embrittlement, and bending performance may be precisely controlled and improved. Component characteristics of a hot stamping component according to embodiments will be described in more detail with reference to FIGS. 5 and 6 to be described later.

A relationship between the heating time s shown in the horizontal axis of FIG. 4 and boundary values is not limited to that shown in FIG. 4, and various changes may be applied within the range of improving the component performance of the hot stamping component according to the present disclosure. In the above, the plurality of sections has been described as having five sections, but the plurality of sections may be differently classified according to the distribution of the temperature increase rate change rate.

FIG. 5 shows a scanning electron microscope (SEM) image showing a cross section of a hot stamping component according to an exemplary embodiment of the present disclosure. The hot stamping component 1 shown in FIG. 5 may be a hot stamping component manufactured by using the method of manufacturing a hot stamping component according to an exemplary embodiment of the present disclosure (e.g., the curve 610 in FIG. 4).

Referring to FIG. 5, the hot stamping component 1 may include a base material 10 and a plating layer 20 including a plurality of layers 21, 22, 23, and 24 positioned on the base material 10. The base material 10 may be a steel sheet manufactured by performing a hot rolling process and/or a cold rolling process on a steel slab cast to include a predetermined alloying element in a predetermined content. For example, the steel sheet may include carbon (C), silicon (Si), manganese (Mn), phosphorus (P), sulfur (S), titanium (Ti), boron (B), remnant iron (Fe), and other unavoidable impurities. In addition, the steel sheet may further include one or more components of niobium (Nb), molybdenum (Mo), and aluminum (Al).

The plating layer 20, as an alloying layer, may be formed on at least one surface of the base material 10 and may include aluminum (Al), iron (Fe), or the like. The plating layer 20 may include a plurality of layers 21, 22, 23, and 24 sequentially stacked on the base material 10. In the hot stamping component 1 according to an exemplary embodiment of the present disclosure, as shown in FIG. 5, the plating layer 20 may be clearly divided into four layers. For example, the plurality of layers 21, 22, 23, and 24 may sequentially have a α-Fe phase, Fe₂Al₅ phase, AlFe phase, and Fe₂Al₅ phase, but the composition of the plurality of layers is not limited thereto. In the hot stamping component 1 shown in FIG. 5, an amount of mixed hydrogen may be 0 ppm or greater and less than 0.21 ppm, and a dynamic resistance value may be greater than 0 mS2 and 0.8 mS2 or less.

FIG. 6 shows a SEM image showing a cross-section of a hot stamping component 1' according to an exemplary embodiment of the present disclosure, and portions that are different from the cross-section of FIG. 5 will be mainly described. The hot stamping component 1' of FIG. 6 may be a component manufactured by using the method of manufacturing a hot stamping component according to an exemplary embodiment of the present disclosure (e.g., the second control curve 620 in FIG. 4).

The hot stamping part 1' illustrated in FIG. 6 may include a base material 10 and a plating layer 30 positioned on the base material 10. Unlike the plating layer 20 of FIG. 5, the plating layer 30 may be a single layer rather than a plurality of layers, and may have a thickness less than that of the plating layer 20. According to an exemplary embodiment, the plating layer 30 may have an unclear boundary even if the plating layer 30 includes a plurality of layers. The plating layer 30 may include at least one of Al, Fe, and Si. In the hot stamping component 1' shown in FIG. 6, an amount of mixed hydrogen may be 0 ppm or greater and less than 0.35 ppm, and the dynamic resistance value may be 0.5 mΩ or greater and 1.5 mΩ or less.

Hereinafter, using Table 1 together, the characteristics of the hot stamping components 1 and 1' according to FIGS. 5 and 6 described above will be compared and described. The evaluation contents described in the Table 1 below may be relative comparison results.

**Table 1**

| | Example 1 (FIG. 5) | Comparative Example (FIG. 6) |
|---|---|---|
| thickness of plating layer | Thickness | tenuity |
| amount of mixed hydrogen (hydrogen embrittlement) | less (predominance) | plenty (inferiority) |
| dynamic resistance | small (about 0.8 mΩ or less) | great (about 0.8 mΩ or greater) |
| weldability | predominance | inferior |

The plating layer 20 of FIG. 5 includes more layers than the plating layer 30 of FIG. 6, and at this time, boundaries between the plurality of layers may also become clear. Accordingly, a thickness of the plating layer 20 is greater than a thickness of the plating layer 30. Here, referring to FIG. 4 together, thickness characteristics of the plating layer and control characteristics of the first control curve 610 may be obtained as a result of mutual influence. For example, when the plating layer has a large thickness, during heating the first heating section P1 and the second heating section P2, the temperature increase rate change rate between the first and second heating sections P1 and P2 may be discontinuously changed, and in the third heating section P3, the slope of the first control curve 610 may be gentle, that is, the temperature increase rate change rate may be small.

On the other hand, as the thickness of the plating layer increases, the amount of mixed hydrogen decreases and the hydrogen embrittlement of the blank becomes excellent. Because the thickness of the plating layer 20 of FIG. 5 is large, as described above, the amount of mixed hydrogen in the component 1 (less than about 0.21 ppm) of FIG. 5 is less than in the component 1' (less than about 0.35 ppm) of FIG. 6, and accordingly, hydrogen embrittlement is higher, and the risk of hydrogen delayed rupture may be reduced.

In addition, a surface resistance of the component 1 of FIG. 5 may be less than that of the component 1' of FIG. 6 due to the thickness characteristics described above of the plating layer. In addition, the less the dynamic resistance, the better the weldability. As described above, because the dynamic resistance value of the component 1 of FIG. 5 (about 0.8 mS2 or less) is less than that of the component 1' of FIG. 6 (about 0.8 mΩ or less), it may be seen that the component 1 of FIG. 5 has superiority in weldability.

As described above, according to the method of manufacturing a hot stamping component according to an exemplary embodiment of the present disclosure, precise control of a component is possible by controlling the temperature increase rate change rate for each section, and thereby, there is an advantage of improving component performance, such as weldability, hydrogen embrittlement, and ultra-high strength of the hot stamping component.

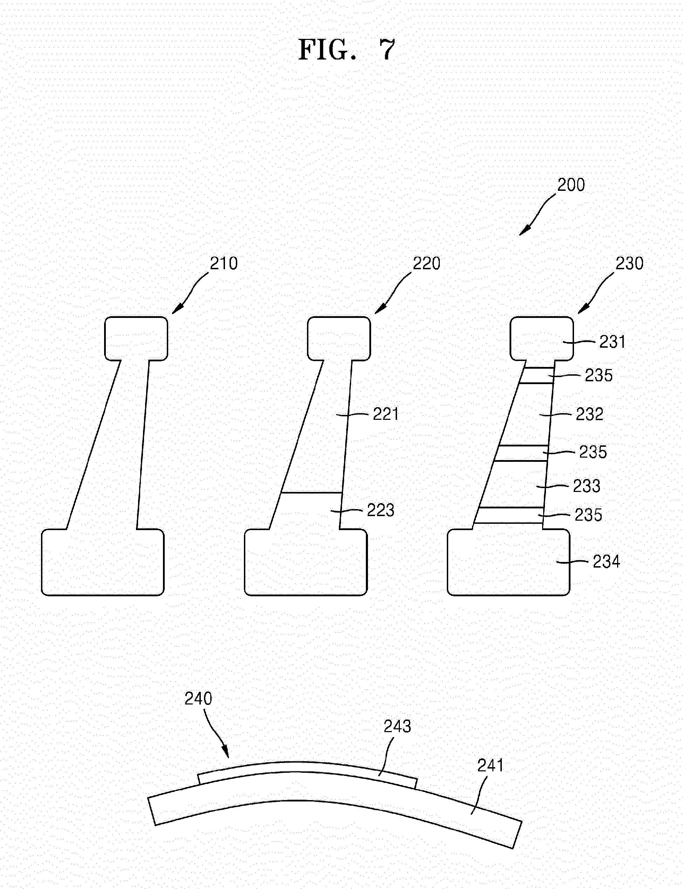

FIG. 7 shows a plan view schematically illustrating a blank 200 used in a method of manufacturing a hot stamping component according to an exemplary embodiment of the present disclosure.

Referring to FIG. 7, the blank 200 according to an exemplary embodiment may include at least one of a blank 210 having a single thickness, a taylor welded blank (TWB) 220 obtained by cutting and welding different shapes of plates having different thicknesses into a required shape, a tailor rolled blank (TRB) 230 having different thicknesses by rolling a single-thickness plate, and a patchwork 240 manufactured by welding a small patch blank to a large blank.

The TWB 220 may be manufactured by welding a first plate material 221 and a second plate material 223 having different thicknesses from each other. A B-pillar, which is an important component for collision members of a vehicle, is a form in which plates of different strengths are combined in an upper collision supporter and a lower shock absorber, and is manufactured by welding the two plates and then forming them. A TWB method, which is mainly used at this time, refers to a series of processes for manufacturing components by cutting and welding different types of sheets with different thicknesses, strengths, and materials to a required shape, and then press forming to manufacture components. By manufacturing blanks having different thicknesses by welding plates having different thicknesses, it is possible to have different properties for each part of the blank. For example, an ultra-high-strength plate of 120 to 150K grade is used for the collision supporter of an upper part of the B-pillar, and a plate with good shock absorption performance is connected to a lower part of the B-pillar where stress is concentrated to improve shock absorption ability in the event of a vehicle collision.

The TRB 230 may be manufactured by rolling a cold-rolled steel material to have a specific thickness profile, and when manufacturing a hot stamping component using the TRB 230, light-weight effect is excellent. For example, the thickness profile may be performed by using a method of the related art. For example, when the cold-rolled steel material is cold-rolled, the TRB 230 including a first region 231 having a first thickness, a second region 232 having a second thickness, a third region 233 having a third thickness, and a fourth region 234 having a fourth thickness may be formed. In this case, the first thickness, the second thickness, the third thickness, and the fourth thickness may be different from each other, and a transition period 235 may exist between the first region 231 and the second region 232, between the second region 232 and the third region 233, and between the third region 233 and the fourth region 234, respectively. However, in FIG. 2, it is illustrated that the TRB 230 includes the first to fourth regions 231 to 234, the present disclosure is not limited thereto. The TRB 230 may be formed to include a first region 231, a second region 232, ... , and an n^{th} region.

The patchwork 240 is a method of partially reinforcing a base material using at least two or more plate materials, and the patch is bonded to the base material before molding process so that the base material and the patch may be formed at the same time. For example, after welding a patch 243 having a second size less than a first size to a base material 241 having the first size, they may be simultaneously molded.

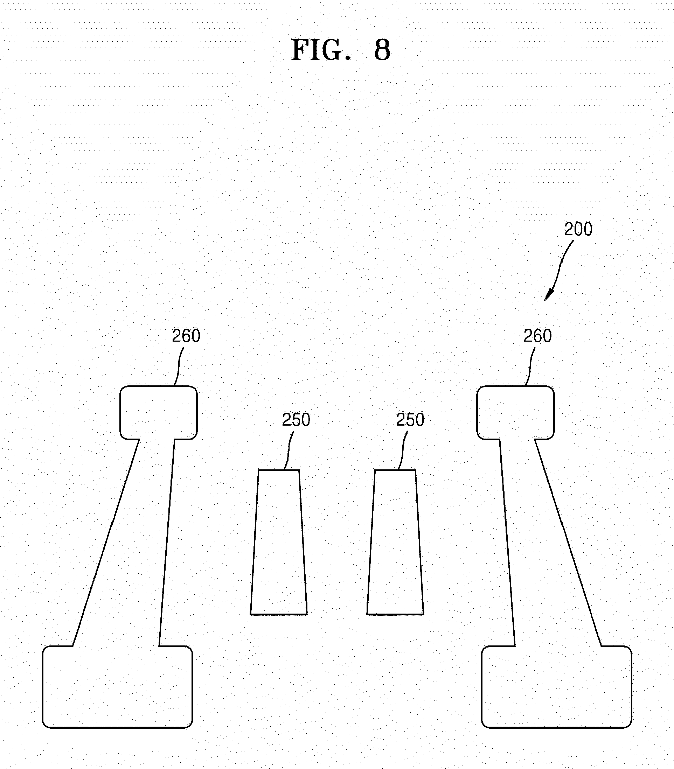

FIG. 8 is a schematic plan view illustrating a blank inserted into a heating furnace in a method of manufacturing a hot stamping component according to an exemplary embodiment of the present disclosure. Hereinafter, the method will be described with reference to FIG. 1.

In the operation of inserting a blank (S100), at least two blanks 200 different from each other in at least one of a thickness and a size may be simultaneously introduced into a heating furnace.

For example, FIG. 8 shows two first blanks 250 and two second blanks 260 that are simultaneously introduced into the heating furnace. In this case, the first blank 250 and the second blank 260 may have different sizes and different thicknesses. For example, the first blank 250 may have a thickness of about 1.2 mm, and the second blank 260 may have a thickness of about 1.6 mm. However, the present disclosure is not limited thereto, and one first blank 250 and one second blank 260 may be simultaneously introduced into the heating furnace. In addition, the first blank 250 and the second blank 260 have the same size but different thicknesses, or are formed to have different sizes with the same thickness, and various modifications are possible.

In another embodiment, in the operation of inserting a blank (S100), at least two blanks 200 having a single thickness may be simultaneously introduced into the heating furnace. For example, at least two or more blanks 240 having a thickness of 1.2 mm may be simultaneously input, or at least two or more blanks 250 having a thickness of 1.6 mm may be simultaneously introduced into the heating furnace. In addition, in the operation of inserting a blank (S100), the TWB 220 (refer to FIG. 7) or the TRB (230, refer to FIG. 7) may be introduced into the heating furnace.

A blank introduced into the heating furnace may be transported along a transport direction after being mounted on a roller (S300).

After the operation of inserting a blank (S100), an operation of multi-stage heating (S200) may be performed. The operation of multi-stage heating (S200) may be an operation in which the blank passes through a plurality of sections provided in the heating furnace and is heated gradually, and may include at least one section in which soaking-heating is performed.

As described above, while the present disclosure has been described with reference to exemplary embodiments shown in the drawings. However, it will be understood by those of ordinary skill in the art that various changes in form and details may be made therein without departing from the spirit and scope of the inventive concept. Accordingly, the scope of the present disclosure is defined not by the detailed description of the invention but by the appended claims.

## Claims

1. A method of manufacturing a hot stamping component, the method comprising:
inserting a blank comprising a plating layer formed on at least one surface of a base material into a heating furnace having a plurality of sections having temperature increase rate ranges different from each other; and
multi-stage heating the blank by gradually heating while passing through the plurality of sections,
wherein the plurality of sections comprise:
a first heating section having a first average temperature increase rate change rate;
after the first heating section, a second heating section having a second average temperature increase rate change rate different from the first average temperature increase rate change rate; and
after the second heating section, a third heating section having a third average temperature increase rate change rate different from the first average temperature increase rate change rate and the second average temperature increase rate change rate,
wherein the third average temperature increase rate change rate comprises a section in which a positive value is changed to a negative value.

2. The method of claim 1, wherein between the first heating section and the second heating section, a change from the first average temperature increase rate change rate to the second average temperature increase rate change rate is discontinuous.

3. The method of claim 1, wherein the third heating section comprises a 3-1 heating section having a 3-1 average temperature increase rate change rate and a 3-2 heating section having a 3-2 average temperature increase rate change rate,
wherein the 3-1 average temperature increase rate change rate has a positive value, and the 3-2 average temperature increase rate change rate has a negative value, and
an absolute value of the 3-1 average temperature increase rate change rate is less than an absolute value of the 3-2 average temperature increase rate change rate.

4. The method of claim 1, wherein the first average temperature increase rate change rate and the second average temperature increase rate change rate each have a negative value, and
an absolute value of the first average temperature increase rate change rate is greater than an absolute value of the second average temperature increase rate change rate.

5. The method of claim 1, wherein the plurality of sections, after the third heating section, further comprises a fourth heating section having a fourth average temperature increase rate change rate different from the first average temperature increase rate change rate, the second average temperature increase rate change rate, and the third average temperature increase rate change rate, and
an absolute value of the fourth average temperature increase rate change rate is less than the absolute value of each of the first average temperature increase rate change rate, the second average temperature increase rate change rate, and the third average temperature increase rate change rate.

6. The method of claim 3, wherein the 3-1 average temperature increase rate change rate has a value of 0 or greater and 0.25 °C/s² or less, and the 3-2 average temperature increase rate change rate has a value of -0.3 °C/s² or greater and 0 or less.

7. The method of any one of claims 4 and 6, wherein the first average temperature increase rate change rate has a value of -0.5 °C/s² or greater and 0 or less, and the second average temperature increase rate change rate has a value of -0.25 °C/s² or greater and 0 or less.

8. The method of claim 1, wherein the plating layer is alloyed in the second heating section, and
the base material has a phase transformation in the third heating section.

9. A hot stamping component manufactured according to any one of claims 1 to 8, the hot stamping component comprising an amount of mixed hydrogen of 0 or greater and less than 0.21 ppm, and a dynamic resistance value of greater than 0 and 0.8 mΩ or less.
